# EUROPEAN PATENT SPECIFICATION

(11) **EP 2 528 373 B1**
(45) Date of publication and mention of the grant of the patent: **03.12.2014**
(21) Application number: 11732689.2
(22) Date of filing: 18.01.2011
(51) Int. Cl.: H04W 24/02, G06F 1/32, G06F 9/50

(54) **METHOD, APPARATUS AND SYSTEM FOR REDUCING POWER CONSUMPTION OF SERVICE SYSTEM**
VERFAHREN, VORRICHTUNG UND SYSTEM FÜR REDUZIERTEN STROMVERBRAUCH EINES DIENSTSYSTEMS
PROCÉDÉ, APPAREIL ET SYSTÈME PERMETTANT DE RÉDUIRE LA PUISSANCE CONSOMMÉE D'UN RÉSEAU DÉPENDANT

(30) Priority: 18.01.2010 CN 201010002823
(43) Date of publication of application: 28.11.2012
(73) Proprietor: Huawei Technologies Co., Ltd., Shenzhen, Guangdong 518129 (CN)
(72) Inventor: CHEN, Bo, Shenzhen Guangdong 518129 (CN)
(74) Representative: Pfenning, Meinig & Partner GbR
(86) International application number: PCT/CN2011/070351
(87) International publication number: WO 2011/085699

(56) References cited:
- EP-A2- 1 816 544
- EP-A2- 1 816 544
- CN-A- 101 232 659
- CN-A- 101 365 192
- CN-A- 101 577 623
- US-A- 5 396 635
- US-A- 5 546 591
- US-A1- 2005 210 905
- US-A1- 2007 101 173
- US-A1- 2008 082 697
- US-A1- 2009 328 055
- BIANCHINI R ET AL: "POWER AND ENERGY MANAGEMENT FOR SERVER SYSTEMS, corrected and augmented onlive version of an invited paper published in IEEE Computer in November 2004", INTERNET CITATION, 10 October 2004 (2004-10-10), XP007900506, Retrieved from the Internet: URL:http://www.cs.rutgers.edu/~ricardob/pa pers/computer04.ps.gz [retrieved on 2004-10-10]

## Description

### FIELD OF THE INVENTION

The present invention relates to the field of communications technologies, and in particular, to a method, an apparatus and a system for reducing power consumption of a service system.

### BACKGROUND OF THE INVENTION

Confronted with pressures coming from operation costs, social responsibilities and government requirements, clients pay more and more attention to the energy-saving and emission-reduction characteristics of telecommunication equipment, and clearly require that telecommunication equipment has lower consumption in production materials, transportation, occupied area, operation electricity and is more environment friendly while supporting a certain capacity specification of services.

Under the circumstances of a small service utilization rate and redundant component processing capabilities, based on the automatic frequency reduction technology of a CPU (Central Processing Unit) and depending on the judgment of an operating system on CPU resource occupancy, current telecommunication equipment reduce CPU dominant frequency to reduce part of power consumption of the equipment.

The prior art at least has the following disadvantages.

CPU power consumption occupies only part of board power consumption of the telecommunication equipment. Therefore, power consumption reduced based on the automatic frequency reduction technology of the CPU is limited. Further, the power consumption reduction based on the automatic frequency reduction technology of the CPU depends on the CPU. Therefore, if the CPU does not support the automatic frequency reduction technology, energy saving cannot be implemented. Another prior art document, US Patent No. 5396635, provides a power conservation system in a computer system which includes a processing unit operating under control of an operating system. The computer system generates distinct call functions to the operating system where each call function is either in an active class or an idle class. The power conservation system has a plurality of states of operation including an ON state, a DOZE state, a SLEEP state and an OFF state. An activity monitor monitors the activity of the computer system and generating control signals for selecting one of the state of operation for the computer system. The activity monitor includes a storage for storing a call value for each distinct call function and activity threshold values for the various states of operation. The call values are weighted for the call functions whereby different call functions have a greater or lesser impact on the value of an activity level. The call value for each call function is retrieved when the call function is made to the operating system. The retrieved call values are sequentially accumulated to form an activity value which indicates the activity level of the computer system. A comparator compares the activity value with the threshold values and in response to the comparison generates a control signal to a power controller which selects the states of operation for the computer system, thereby regulating the power consumption of the computer system based on the activity of the computer system. To prevent the system from oscillating between active and idle state due to minor changes in system activity, hysteresis is provided by using active and idle function call thresholds.

Another prior art, US Publication No. 2007/101173A1, provides a method for managing power consumption and workload in computer system and data and information servers. Further provides power and energy consumption and workload management and control systems and architectures for high-density and modular multi-server computer systems that maintain performance while conserving energy and method for power management and workload management. Dynamic server power management and optional dynamic workload management for multi-server environments is provided by aspects of the invention. Modular network devices and integrated server system, including modular servers, management units, switches and switching fabrics, modular power supplies and modular fans and a special backplane architecture are provided as well as dynamically reconfigurable multi-purpose modules and servers. Backplane architecture, structure, and method that has no active components and separate power supply lines and protection to provide high reliability in server environment.

Another prior art, US Publication No. 2009/0328055 A1, provides a system and method for improving efficiency of a multi-core architecture including, in accordance with a workload, determining a number of cores to shut down based upon a metric that combines parameters to represent operational efficiency. Threads of the workload are reassigned to cores remaining active by assigning threads based on priority constraints and thread execution history to improve the operational efficiency of the multi-core architecture.

Another prior art, EP Publication No. EP 1 816 544 A2, provides a server system including a control device and plurality of server devices. The control device calculates an actual power consumption of the server system and notifies the actual power consumption to the server devices. Each server device compares the actual power consumption with a threshold value, and restricts power consumption of the server device based on a power-saving policy for the server device that represents a lower limit of power usable by the server device when the actual power consumption is greater than or equal to the threshold value. The power consumption of a server blade is not at once reduced to a minimum guaranteed power value set but is brought down step-by-step by repeatedly imposing power restriction. Therefore, the system will not oscillate repeatedly between fall in power consumption and increased power consumption.

Another prior art, US Publication No. 2005/210905 A1, provides a system including a first portion and a processor. The first portion may include a first thermal sensor to provide first thermal data. The processor may include a core, a core thermal sensor to provide core thermal data, and an electrical power sensor to provide electrical data. The processor may also include a power management unit to selectively throttle the core based on the first thermal data, the core thermal data, and the electrical data. A throttle condition may be forced for a period with some delay to prevent the system from oscillating between operating points.

### SUMMARY OF THE INVENTION

An embodiment of the present invention provides a method for reducing power consumption of a teleconmmnications service system, comprising the steps of: 1) determining whether a service utilization rate of the telecommunications service system is smaller than a startup threshold for energy saving and, if it is smaller, performing the following steps: 1 a) determining, according to a preset condition, a board of the telecommunications service system that is required to be powered down; and Ib) performing vibration detection processing comprising the steps of: 1 b-i) determining whether the service utilization rate of the telecommunications service system will be smaller or greater than a restore threshold for energy saving, if the determined board will be powered down; and 1 b-ii) triggering power-down of the determined board if the service utilization rate of the telecommunications service system will be smaller than the restore threshold, and not triggering power-down of the determined board if the service utilization rate of the telecommunications service system will be greater than the restore threshold; and 2) after a board is powered down in step 1 b-ii, determining whether a service utilization rate of the telecommunications service system is greater than the restore threshold for energy saving, and, if it is greater, powering up the determined board.

An embodiment of the present invention further provides an apparatus for reducing power consumption of a telecommunications service system, comprising: a first module for determining whether a service utilization rate of the telecommunications service system is smaller than a startup threshold for energy saving; a second module for determining, according to a preset condition, a board of the teleconmmnications service system that is required to be powered down, if the service utilization rate of the telecommunications service system is smaller than the startup threshold; a third module for determining, if the service utilization rate of the telecommunications service system is smaller than the startup threshold, whether the service utilization rate of the telecommunications service system will be smaller or greater than a restore threshold for energy saving, if the determined board will be powered down; a fourth module for triggering, if the service utilization rate of the telecommunications service system is smaller than the startup threshold, power-down of the determined board if the service utilization rate of the telecommunications service system will be smaller than the restore threshold, and not triggering power-down of the determined board if the service utilization rate of the telecommunications service system will be greater than the restore threshold; and a fifth module for, after a board is powered down, determining whether a service utilization rate of the telecommunications service system is greater than the restore threshold for energy saving, and, if it is greater, powering up the determined board.

In the embodiments of the present invention, when the service utilization rate of the service system is smaller than the startup threshold for energy saving, the board of the service system is determined according to the preset condition, where the board of the service system is required to be powered down, and is powered down, which is capable of more effectively reducing power consumption of the service system and achieving good energy-saving effects independent of the CPU in comparison with the technical solution of reducing power consumption of a service system based on automatic frequency reduction technology of the CPU in the prior art.

### BRIEF DESCRIPTION OF THE DRAWING

To illustrate the technical solutions according to the embodiments of the present invention or in the prior art more clearly, accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts. In the accompanying drawings:
FIG. 1 is a specific implementation flowchart of a method for reducing power consumption of a service system according to an embodiment of the present invention;
FIG. 2 is a specific implementation flowchart of a method for reducing power consumption of a service system according to an embodiment of the present invention;
FIG. 3 is a schematic flowchart of powering down a board and repowering up the board according to an embodiment of the present invention;
FIG. 4 is a schematic flowchart of energy-saving processing according to an embodiment of the present invention;
FIG. 5 is a schematic diagram of interface registration of a specific instance of energy-saving processing according to an embodiment of the present invention;
FIG. 6 is a schematic diagram of a specific instance of energy-saving processing according to an embodiment of the present invention;
FIG. 7 is a schematic diagram of invoking a service restore interface and a service restore failure processing interface of a specific instance of energy-saving processing according to an embodiment of the present invention;
FIG. 8 is a schematic structural diagram of a service system according to an embodiment of the present invention;
FIG. 9 is a schematic structural diagram of an energy-saving system according to an embodiment of the present invention; and
FIG. 10 is a schematic structural diagram of a control system for reducing power consumption of a service system according to an embodiment of the present invention.

### DETAILED DESCRIPTION OF THE EMBODIMENTS

In order to make the objectives, technical solutions, and advantages of the present invention more comprehensible, embodiments of the present invention are illustrated in further detail below with reference to the accompanying drawings. Here, the exemplary embodiments and the illustrations of the present invention are only intended to explain the present invention, rather than serve as a limitation of the present invention.

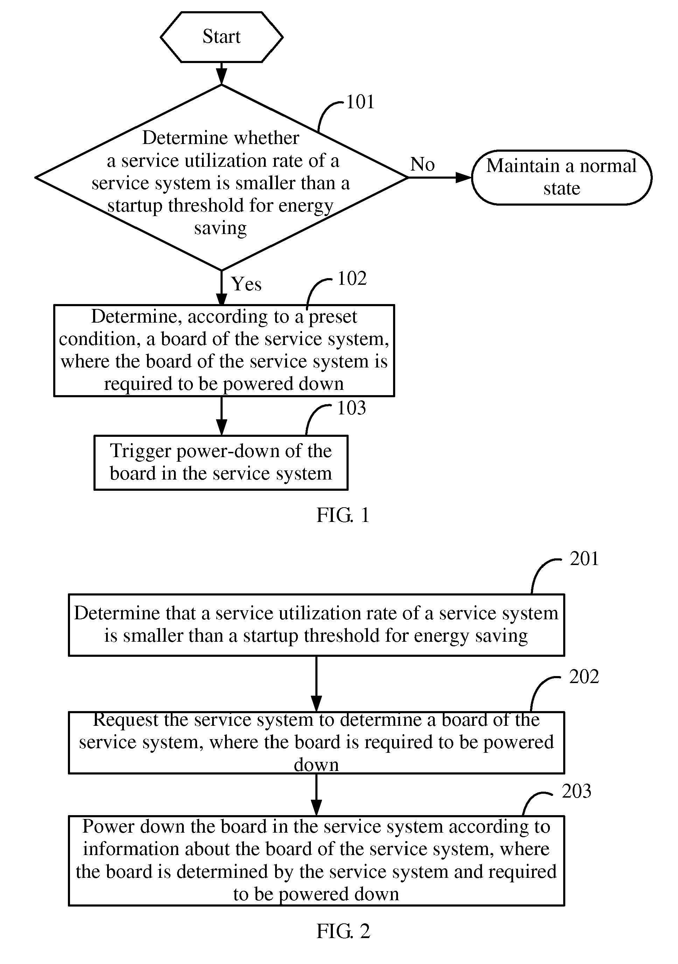

To effectively reduce power consumption of a service system and implement energy-saving independent of the CPU, in an embodiment of the present invention, a specific implementation process of a method for reducing power consumption of the service system is as shown in FIG. 1, including:
Step 101: Determine whether a service utilization rate of the service system is smaller than a startup threshold for energy saving; if the service utilization rate of the service system is smaller than the startup threshold for energy saving, perform step 102; and if the service utilization rate of the service system is not smaller than the startup threshold for energy saving, maintain a normal state of the service system.

During implementation, the normal state is a state in which power-up, power-down or related processing is not performed on a board of the service system, and the service system continues to process a service or a new service. To maintain the normal state, that is, the normal state processing, may be not to perform any other processing, and to enable the service system to continue to process an existing service or a new service; and definitely, may also be to perform processing except powering down the board of the service system, where the processing has no impact on energy-saving implementation of the embodiment of the present invention.

Step 102: Determine, according to a preset condition, a board of the service system where the board of the service system is required to be powered down.

Specifically, the preset condition may be powering down a board with the currently high service processing capacity to effectively reduce the service utilization rate, or may also be powering down a board with the currently low service processing capacity to save time for completing the current service processing; alternatively, may be determined according to service characteristics of various services, for example that the shortest time is required for a board to process a currently processed service, or may also be determined by user features of services currently processed by boards for example, not powering down a board processing a service of a VIP user; and alternatively, may be powering down the board that is powered up earliest or powering down a board randomly. The present invention does not list all the possible conditions herein.

Step 103: Trigger power-down of the board in the service system.

The procedure of the method shown in FIG. 1 may be performed by an entity capable of implementing the functions. The entity has many types, such as an RDB (Resource Database, resource database) system. For easy description, the entity performs the procedure of the method shown in FIG. 1 is called a service system. The RDB system may be located in any server, such as a call center and a multi-core processor, which is not limited in the present invention.

As shown in FIG. 2, an embodiment of the present invention further provides a method for reducing power consumption of a service system, where the method includes:
Step 201: Determine that a service utilization rate of the service system is smaller than a startup threshold for energy saving.
Step 202: Request the service system to determine a board of the service system, where the board of the service system is required to be powered down.
Step 203: Power down the board of the service system according to information about the board of the service system, where the board of the service system is determined by the service system and is required to be powered down.

It can be known from the procedure shown in FIG. 1 or FIG. 2 that, in the embodiments of the present invention, if the service utilization rate of the service system is determined to be smaller than the startup threshold for energy saving, the board of the service system is determined according to a preset condition, where the board of the service system is required to be powered down, and power-down of the board of the service system is triggered, which reduces not only CPU power consumption of the board power consumption, but also the power consumption of the entire board, and thus is capable of more effectively reducing power consumption of the service system and achieving good energy-saving effects independent of the CPU, in comparison with the technical solution of reducing power consumption of a service system based on the automatic frequency reduction technology of the CPU in the prior art.

The procedure of the method shown in FIG. 2 may be performed by an entity capable of implementing the functions. The entity has many types, such as a PSM (Power Saving Management) system. For easy description, the entity performing the procedure of the method shown in FIG. 2 is called an energy-saving system. The PSM system may be located in any servers, which is not limited in the present invention.

In the procedures shown in FIG. 1 and FIG. 2, the service utilization rate of the service system may be customized. Different service utilization rates may be preset for different service systems. For example, if the service system is a call center, the service utilization rate may be a media resource utilization rate, a file server utilization rate, a call processing resource pool utilization rate or the like.

In the procedures shown in FIG. 1 and FIG. 2, during specific implementation, many implementation methods exist for determining whether the service utilization rate of the service system is smaller than the startup threshold for energy saving. For example, a service system may inform an energy-saving system about a service utilization rate of the service system and a startup threshold for energy saving, and then the energy-saving system determines whether the service utilization rate of the service system is smaller than the startup threshold for energy saving; for another example, a service system may determine by itself whether a service utilization rate of the service system is smaller than a startup threshold for energy saving and then inform an energy-saving system about the determination result. After obtaining the determination result, the energy-saving system determines whether the result is that the service utilization rate of the service system is smaller than the startup threshold for energy saving or that the service utilization rate of the service system is not smaller than the startup threshold for energy saving.

During specific implementation, a service utilization rate of a service system at different moments may be different. After a board of the service system is powered down, the service utilization rate may increase to a certain degree at a certain moment, making a board that is processing a service in the service system fail to process the service timely. Therefore, to ensure that the service can be processed timely, the service system may preset a restore threshold for energy saving during implementation. After a board is powered down in the service system, if it is determined that the service utilization rate of the service system is greater than the restore threshold for energy saving, the service system enters the service restore state. In this state, the board of the service system powered down previously needs to be repowered up. The energy-saving system performs a step of repowering up the board that is powered down previously.

Many implementation manners exist for determining whether the service utilization rate of the service system is greater than the restore threshold for energy saving. For example, a service system may inform an energy-saving system about a service utilization rate of the service system and a restore threshold for energy saving, and then the energy-saving system determines whether the service utilization rate of the service system is greater than the restore threshold for energy saving; for another example, a service system may determine by itself whether a service utilization rate of the service system is greater than a restore threshold for energy saving and then inform an energy-saving system about the determination result. After obtaining the determination result, the energy-saving system determines whether the result is that the service utilization rate of the service system is greater than the restore threshold for energy saving or that the service utilization rate of the service system is not greater than the restore threshold for energy saving.

During implementation, whether the service utilization rate of the service system is smaller than the startup threshold for energy saving may be determined regularly or irregularly; and after a board is powered down in the service system, whether the service utilization rate of the service system is greater than the restore threshold for energy saving may be determined regularly or irregularly.

The service system may inform the energy-saving system about the service utilization rate of the service system, a preset startup threshold for energy saving, the preset restore threshold for energy saving or the foregoing determination result in a message sending manner or in a function registration manner. If the service system informs the energy-saving system in the function registration manner, the service system may define corresponding operation interfaces, and then the energy-saving system invokes these interfaces to perform corresponding operations. For example, when the service system enters the service restore state, the energy-saving system invokes a service restore interface defined by the service system to perform service restore processing. The service restore processing is that the energy-saving system repowers up the board that is powered down previously in the service system. When performing operations for powering down the board in the service system or repowering up the board that is powered down previously in the service system, the energy-saving system may control power-up and power-down of the board in the service system through a notification message or in a function invoking manner.

In the foregoing embodiment, the service system maintains a board resource pool, where a board in the board resource pool is a board being used, that is, a board that is powered up. The service system may maintain a board identification table to identify which board is powered up. In the process of maintaining the board resource pool during implementation, operations may be performed on a single board at a time, or on multiple boards simultaneously as long as a prerequisite for performing operations on these boards is met, where the prerequisite is that the service utilization rate is smaller than the startup threshold for energy saving or greater than the restore threshold for energy saving. For example, if the service utilization rate of the service system is smaller than the startup threshold for energy saving, a board in the service system may be powered down, or multiple boards in the service system may be powered down simultaneously. The service system is required to determine, according to a preset condition, which board of the service system is to be powered down, and then informs the energy-saving system; when repowering up the boards of the service system that are powered down previously, the energy-saving system may randomly power up a board.

In an embodiment, after a service system determines that a service utilization rate of itself is smaller than a startup threshold for energy saving, the service system determines, according to the preset condition, a board required to be powered down and triggers power-down of the board. Specifically, the service system notifies an energy-saving system of powering down the board in the service system, where the notification carries information about the board in the service system, so that the energy-saving system may power down the board according to the information about the board in the service system; after receiving the notification sent by the service system, the energy-saving system powers down the board according to the information that is in the notification and about the board in the service system. The information about the board indicates which board in the service system the board is, such as an identifier and location of the board.

As mentioned above, the service system may send the service utilization rate and the startup threshold for energy saving to the energy-saving system, and then the energy-saving system determines whether the received service utilization rate is smaller than the startup threshold for energy saving. Therefore, in another embodiment, after determining that the received service utilization rate is smaller than the startup threshold for energy saving, the energy-saving system may send the service system a request for determining a board that is required to be powered down; after receiving the request, the service system determines, according to the preset condition, a board that is required to be powered down, and sends the energy-saving system a notification of powering down the board in the service system, where the notification carries information about the board in the service system, so that the energy-saving system may power down the board according to the information about the board in the service system; and after receiving the notification sent by the service system, the energy-saving system powers down the board according to the information that is in the notification and about the board of the service system.

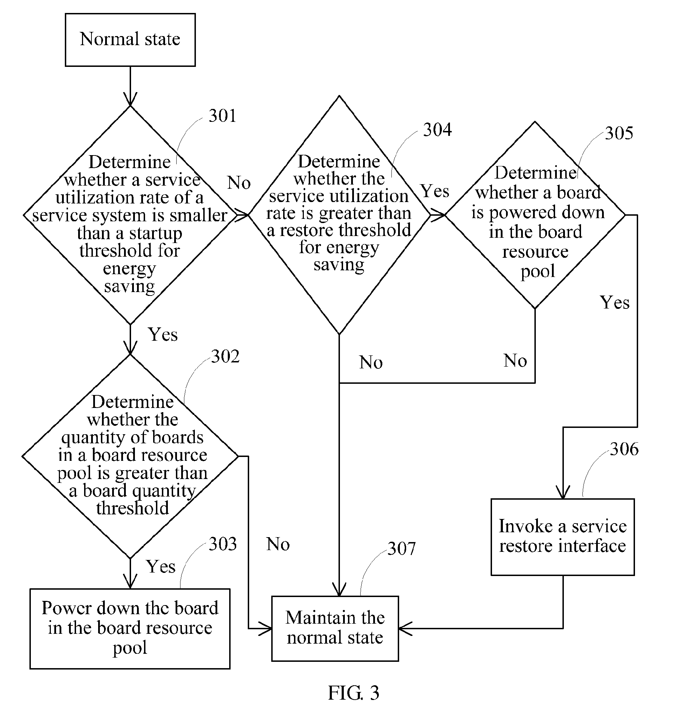

For example, as shown in FIG. 3, an energy-saving system performs operations of powering down or repowering up a board in a service system according to an embodiment, where the detailed processing process during implementation of the embodiment may include:
Step 301: Judge whether a service utilization rate of the service system is smaller than a startup threshold for energy saving; if the service utilization rate of the service system is smaller than the startup threshold for energy saving, perform step 302; and if the service utilization rate of the service system is not smaller than the startup threshold for energy saving, perform step 304.
Step 302: Judge whether the quantity of boards in a board resource pool is greater than a board quantity threshold; if the quantity of boards in the board resource pool is greater than the board quantity threshold, perform step 303; and if the quantity of boards in the board resource pool is not greater than the board quantity threshold, perform step 307. The objective of setting this determination condition is to better ensure that enough boards exist in the resource pool for processing services; and definitely, during implementation, this determination condition may not be set.
Step 303: Request the service system to judge a board that is required to be powered down in the board resource pool; and power down the board specified by the service system, according to information about the board judged by the service system according to a preset condition.
Step 304: Judge whether the service utilization rate is greater than a restore threshold for energy saving; if the service utilization rate is greater than the restore threshold for energy saving, perform step 305; and if the service utilization rate is not greater than the restore threshold for energy saving, perform step 307.
Step 305: Judge whether there is a board powered down in the service system; if there is a board powered down, perform step 306; and if there is no board powered down, perform step 307.
Step 306: Invoke a service restore interface to repower up the board that is powered down.
Step 307: Maintain a normal state and end the processing.

In the embodiment of the present invention, a possible case is that if the board in the service system is powered down, the service utilization rate of the service system is immediately greater than the restore threshold for energy saving. For example, the startup threshold for energy saving is 20%, the restore threshold for energy saving is 30% and the current service utilization rate is 18%. After a board of the service system is powered down, the service utilization rate immediately rises to 35%, which is greater than the restore threshold for energy saving. Then, the board is repowered up, and after the power-up, the service utilization rate of the service system is smaller than the startup threshold for energy saving again. Therefore, the entire service system vibrates.

To avoid service system vibration as much as possible and enable the service system to achieve reliability of telecommunication level, in an embodiment, after it is determined that the service utilization rate of the service system is smaller than the startup threshold for energy saving, the service system enters a vibration detection state. In this state, the energy-saving system needs to detect whether the service system vibrates. The detection may also be performed in a message sending manner or a function registration manner. For example, if the detection is performed in the function registration manner, the energy-saving system may invoke a vibration detection interface defined by the service system to request the service system to perform vibration detection processing, that is, to judge whether the service utilization rate of the service system is greater than the restore threshold for energy saving if the specified board in the service system is powered down; if the vibration detection result is that the service utilization rate of the service system is smaller than the restore threshold for energy saving if the board is powered down, it is considered that the service system does not vibrate, and the board is powered down; while if the vibration detection result is that the service utilization rate of the service system is greater than the restore threshold for energy saving if the board is powered down, it is considered that the service system vibrates, and the board is not powered down. The service system may judge whether the service utilization rate of the service system is greater than the restore threshold for energy saving if a specified board of the service system is powered down, and then sends the judgment result to the energy-saving system; alternatively, the energy-saving system may directly completes the judgment, which is similar to the foregoing service restore processing.

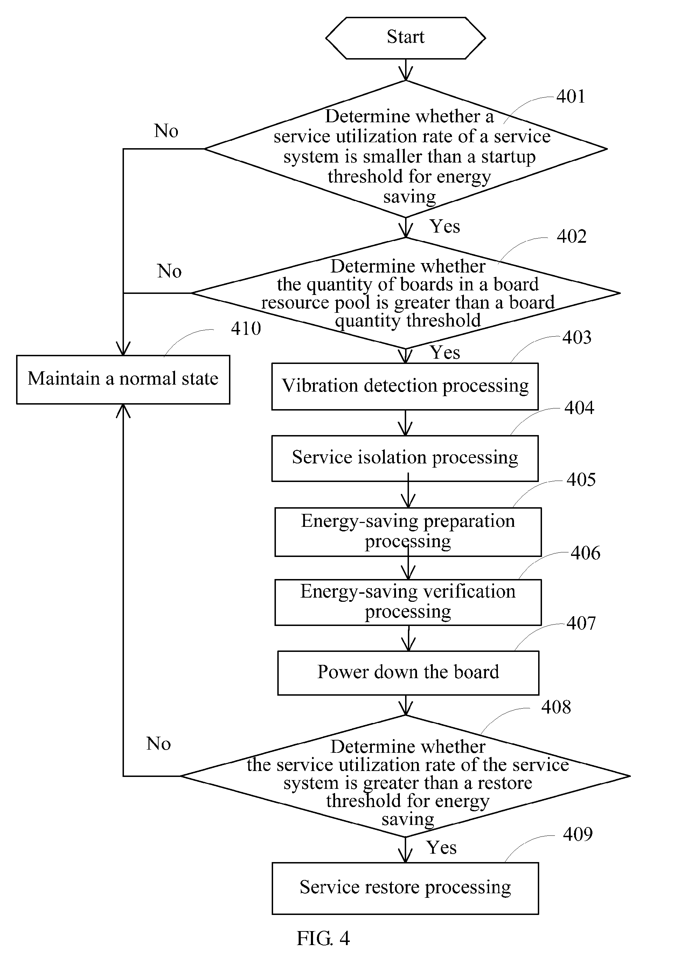

An embodiment of the present invention provides a flowchart of energy-saving processing performed on a service system, where a board of the service system is powered down or repowered up to maintain a board resource pool. As shown in FIG. 4, the processing process in the embodiment may include:
Step 401: Judge whether a service utilization rate of the service system is smaller than a startup threshold for energy saving; if the service utilization rate of the service system is smaller than the startup threshold for energy saving, perform step 402; and if the service utilization rate of the service system is not smaller than the startup threshold for energy saving, perform step 410.
Step 402: Judge whether the quantity of boards in the board resource pool is greater than a board quantity threshold; if the quantity of boards in the board resource pool is greater than the board quantity threshold, perform step 403; and if the quantity of boards in the board resource pool is not greater than the board quantity threshold, perform step 410.
Step 403: Perform vibration detection processing. That is, send a vibration detection request to the service system, and receive a vibration detection result provided by the service system, where the vibration detection result indicates whether the service utilization rate of the service system is greater than a restore threshold for energy saving if board of the service system id powered down. When the step is performed, after receiving the vibration detection request, the service system determines, according to a preset condition, a board required to be powered down, determines whether the service utilization rate of the service system is greater than the restore threshold for energy saving if the board is powered down, and then returns the determination result, that is, the vibration detection result.
Step 404: Perform service isolation processing if the vibration detection result is that the service utilization rate of the service system is smaller than the restore threshold for energy saving if the board in the service system is powered down. That is, an energy-saving system sends a service isolation request to the service system, notifying the service system of stopping delivering a new service to the board that is required to be powered down, and reads an isolation processing result of the service system.

The step is performed to ensure that the service being processed is not affected after the board in the service system is powered down. When the step is performed, the service system enters the service isolation state. In this state, the energy-saving system performs service isolation processing. That is, the energy-saving system stops delivering a new service to the board required to be powered down. The energy-saving system may also stop an existing service on the board or wait for processing of the existing service on the board to be completed. Similar to the service restore processing and vibration detection processing, the energy-saving system may invoke a service isolation interface defined by the service system to perform the service isolation processing. That is, before powering down the board of the service system, the energy-saving system stops delivering a new service to the board, and stops an existing service on the board or waits for processing of the existing services on the board to be completed. During specific implementation, the energy-saving system may stop delivering a new service to the board after determining that the service system does not vibrate, and stop an existing service on the board or wait for processing of the existing services on the board to be completed. Similarly, different boards in different service systems have different implementation methods. The service isolation processing may be performed in a message sending manner or a function registration manner.

Step 405: Perform energy-saving preparation processing if the service system stops delivering a new service to the board required to be powered down. That is, send an energy-saving preparation message to the service system and receive or read an energy-saving preparation result provided by the service system, where the result indicates whether all existing services on the board required to be powered down are stopped.

When the step is performed, the service system enters an energy-saving preparation state, and in this state, it is determined whether all the existing services on the board to be powered down are stopped. Similarly, the energy-saving system may invoke an energy-saving preparation interface defined by the service system to perform the energy-saving preparation processing, that is, to determine whether all the existing services on the board are stopped. Subsequently, the energy-saving system powers down the board after determining that all the existing services on the board are stopped.

Step 406: Perform energy-saving verification processing if all the existing services on the board to be powered down are stopped. That is, send an energy-saving verification request message to the service system, requesting the service system to save state information about the boards to be powered down; and read an energy-saving verification processing result of the service system, where the result indicates whether the state information about the boards to be powered down is stored.

When the step is performed, the service system enters an energy-saving verification state, and in this state, the state information about the boards needs to be saved for use in subsequent repower-up. Similarly, the energy-saving system may invoke an energy-saving verification interface defined by the service system to perform the energy-saving verification processing, that is, to save the state information about the board to be powered down; and if subsequently the service utilization rate of the service system is greater than the restore threshold for energy saving, the energy-saving system may repower up the board according to the saved state information. The reason of the processing is that the state information about the board before power-down needs to be saved, so that the board may enter service processing quickly after repower-up. For example, if a board to be powered down is a media resource board of a call center, a voice Cache file may be saved to a file server before power-down.

A determination condition of the foregoing energy-saving verification processing is: whether all the existing services on the board to be powered down are stopped. The determination may be implemented through a message or in a function registration manner.

Step 407: Power down the board in the service system after determining that the state information about the board to be powered down is stored, so as to achieve the objective of energy-saving of the service system.

Step 408: Judge whether the service utilization rate of the service system is greater than the restore threshold for energy saving after the board in the service system is powered down; if the service utilization rate of the service system is greater than the restore threshold for energy saving, perform step 409; and if the service utilization rate of the service system is not greater than the restore threshold for energy saving, perform step 410.

Step 409: The service system enters a service restore state and performs service restore processing if the service utilization rate of the service system is greater than the restore threshold for energy saving. That is, repower up the board that is powered down, according to the previously saved state information about the board.

Step 410: Maintain a normal state of the service system and end the processing.

The foregoing embodiment provides a processing method for energy-saving state transition, where a normal state, a vibration detection state, a service isolation state, an energy-saving preparation state, an energy-saving verification state and a service restore state of the service system are defined, interfaces for transition between states of the service system are defined, and the interface is provided by the service system. For example, in the service isolation state, different service systems may process differently. For example, in the energy-saving process of a media resource board of a call center, the service system registers a service isolation interface to implement through the interface: No more new service is delivered to the board.

In the foregoing embodiment, the judgment between the service utilization rate and the startup threshold for energy saving and between the service utilization rate and the restore threshold for energy saving, the vibration detection processing, the service isolation processing, the energy-saving preparation processing and the service verification processing may be defined by the service system, and register with the energy-saving system in a function registration manner. The state transition of the service system depends on results of the foregoing processing. Definitely as mentioned above, each of the foregoing processes may be performed in a message transmission manner.

In the entire process above, the energy-saving system may invoke a service restore interface defined by the service system to detect whether the service utilization rate of the service system is greater than the restore threshold for energy saving; and if the service utilization rate of the service system is greater than the restore threshold for energy saving, the energy-saving system performs the service restore processing and repowers up the board.

As for the different processing in different states described above, judgment of state transition conditions may be implemented in the function registration manner. For different boards different service systems may invoke different interfaces through registered functions to implement different service processing. The service processing results may be returned directly through corresponding interfaces or in an asynchronous manner such as mailbox. For different services, some of the foregoing processing may be omitted, such as the energy-saving verification processing. If this step is not performed, the corresponding function does not need to be registered, and the energy-saving system skips the state transition.

It can be seen from the foregoing description that, each state transition has error processing. Therefore, energy-saving does not result in instability of the service system. If the service utilization rate is greater than the restore threshold for energy saving, the service processing capability of the service system is quickly restored to meet the reliability requirement of telecommunication-level equipment. When the service system has a large capacity, the quantity of service boards of a same type is very large. Therefore, very good energy-saving effects are achieved when the service utilization rate is smaller than the startup threshold for energy saving. Especially for the current telecommunication equipment, to achieve the objective of smooth capacity expansion and evolution, different processing modules may work in the form of a board resource pool, which is very suitable for energy saving of this type of equipment. Different processing boards implement energy saving by defining different registration functions to define an energy-saving restore interface, a vibration detection interface, a service isolation interface, a service preparation interface and a service verification interface.

In conclusion, in the foregoing embodiments the service utilization rate of the service system is monitored and managed. If a board is powered down in the case of a small service utilization rate of the service system and redundant boards, the energy-saving effects of the service system are far better than those achieved by reducing only the CPU frequency. Simultaneously, service isolation is performed to avoid impact on a normal service. If the service utilization rate increases, processing capabilities of the boards are restored timely to smoothly carry high-load service traffic. In this way, high reliability of telecommunication level is ensured.

The following provides a detailed implementation scenario for describing the method according to an embodiment of the present invention. In this embodiment, a UAP (Universal Access Platform, universal access platform) in a call center powers down an MSU (Media Source Unit, media source unit) to implement energy saving.

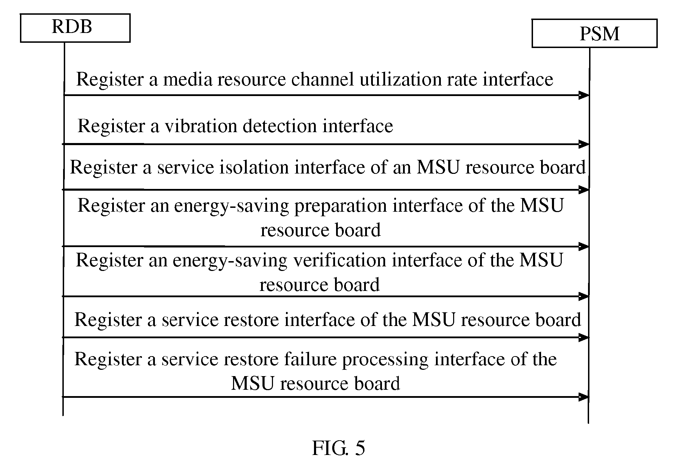

In this embodiment, the service utilization rate of the RDB system is a media resource channel utilization rate; and the RDB system first needs to register related interfaces with the PSM system. As shown in FIG. 5, the interfaces required to be registered include: a vibration detection interface, a service isolation interface, an energy-saving preparation interface (to determine whether services are stopped), an energy-saving verification interface (to save state information about board before power-down), and a service restore interface; a media resource channel utilization rate interface, configured to collect statistics on a channel utilization rate of the MSU in the RDB system; and a service restore failure processing interface, configured to perform processing when the service restore fails.

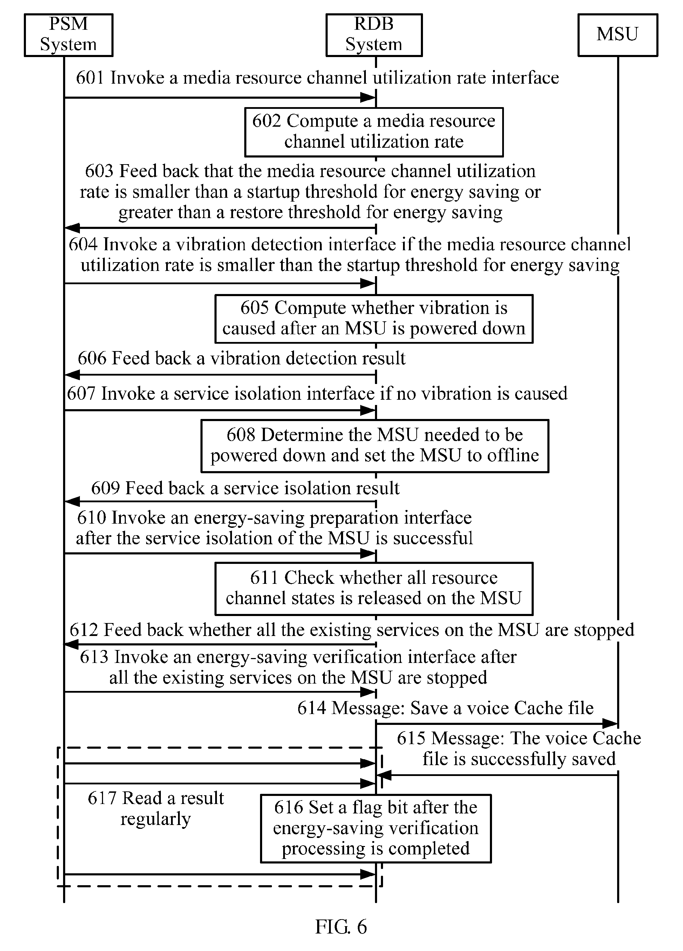

As shown in FIG. 6, in this embodiment, related processing of reducing power consumption of the service system includes:
Step 601: A PSM system invokes a media resource channel utilization rate interface registered by an RDB system.
Step 602: The RDB system computes a media resource channel utilization rate in the RDB system.
Step 603: The RDB system feeds back to the PSM system that the media resource channel utilization rate is smaller than a startup threshold for energy saving, if the media resource channel utilization rate of all MSUs in the RDB system is smaller than 20%; and the RDB system feeds back to the PSM system that the media resource channel utilization rate is greater than a restore threshold for energy saving, if the media resource channel utilization rate of all MSUs in the RDB system is greater than 30%.
Step 604: The PSM system invokes a vibration detection interface registered by the RDB system, if the media resource channel utilization rate of the RDB system is smaller than the startup threshold for energy saving.
Step 605: The RDB system determines, according to a preset condition, an MSU to be powered down, and performs vibration detection processing, that is, computes whether vibration is caused after the MSU is powered down.
Step 606: The RDB system feeds back a vibration detection result to the PSM system.
Step 607: The PSM system invokes a service isolation interface registered by the RDB system, if no vibration is caused; and maintain a normal state of the RDB system, if vibration is caused.
Step 608: The RDB system determines the MSU to be powered down, sets the MSU to an offline state, and allocates no more channel to the MSU.
Step 609: The RDB system feeds back to the PSM system whether service isolation is successful, that is, whether the MSU is set to an offline state and no more channel is allocated to the MSU. Step 610: The PSM system invokes the energy-saving preparation interface, after determining, according to the service isolation result fed back by the RDB system, that the service isolation of the MSU is successful.
Step 611: The RDB system checks whether all resource channel states are released on the MSU, that is, whether existing services are stopped.
Step 612: The RDB system feeds back to the PSM system whether the existing services on the MSU are stopped.
Step 613: The PSM system invokes the energy-saving verification interface after all the existing services on the MSU are stopped.
Step 614: The RDB system sends a message to the MSU, making the MSU to save a voice Cache file.
Step 615: The MSU feeds back whether the voice Cache file is successfully saved.
Step 616: The RDB system sets a flag bit after the energy-saving verification processing is completed.
Step 617: The PSM system queries the RDB system for an energy-saving verification result fed back asynchronously.

In the embodiment, the PSM system invokes a power supply system to power down the MSU, after the energy-saving verification processing is completed.

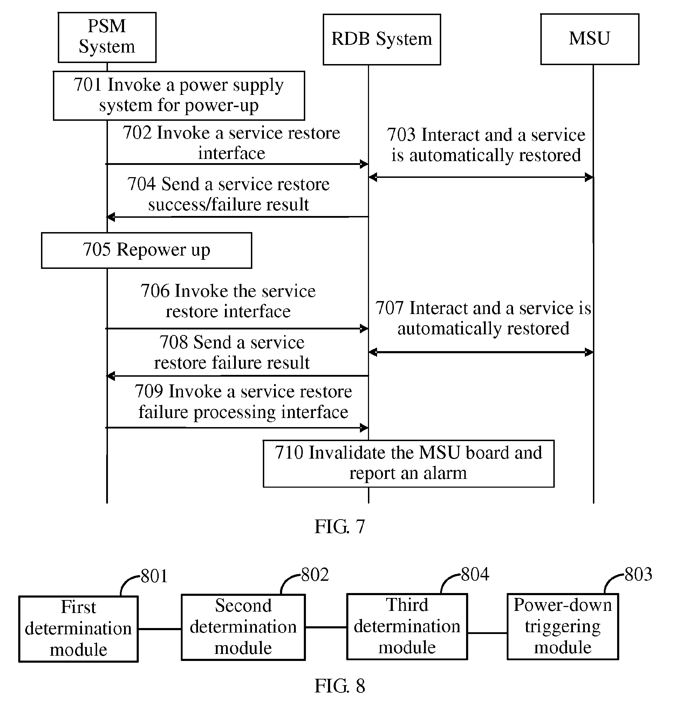

As shown in FIG. 7, related processing of invoking a service restore interface and a service restore failure processing interface of an MSU includes:
Step 701: A PSM system invokes a media resource channel utilization rate interface registered by an RDB system; and if a feedback media resource channel utilization rate is greater than a restore threshold for energy saving, the PSM system invokes a power supply system to power up the MSU.
Step 702: The PSM system invokes the service restore interface.
Step 703: The RDB system interacts with the MSU, and a service is automatically restored.
Step 704: The RDB system feeds back a service restore success or failure result to the PSM system.
Step 705: The PSM system invokes the power supply system to repower up the MSU, if the service restore fails.
Step 706: The PSM system invokes the service restore interface.
Step 707: The RDB system interacts with the MSU, and a service is automatically restored.
Step 708: The RDB system feeds back a service restore success or failure result to the PSM system.
Step 709: The PSM system may invoke the service restore failure processing interface, if the feedback result is that the service restore fails again, that is, if the service restore fails multiple times.
Step 710: The RDB system invalidates the board and reports an alarm.

Persons of ordinary skill in the art should understand that all or a part of the steps in the method according to the embodiments of the present invention can be implemented by a program instructing relevant hardware, and the program may be stored in a computer readable storage medium. When the program is run, the steps of the method according to the embodiments of the present invention are performed. The storage medium includes a ROM, a RAM, a magnetic disk or an optical disk.

Embodiments of the present invention also provide an apparatus and a control system for reducing power consumption of a service system, as described in the following embodiments. The principle of the apparatuses and systems for solving the problems is similar to that of the method for reducing power consumption of a service system, so for implementation of the apparatuses and systems, reference may be made to the implementation of the method, which is not repeated herein.

As shown in FIG. 8, an apparatus for reducing power consumption of a service system according to an embodiment may include:
a first determination module 801, configured to determine that a service utilization rate of the service system is smaller than a startup threshold for energy saving;
a second determination module 802, configured to determine, according to a preset condition, a board of the service system, where the board of the service system is required to be powered down; and
a power-down triggering module 803, configured to trigger power-down of the board of the service system.

In an embodiment, the first determination module 801 may be specifically configured to: determine that the service utilization rate of the service system is smaller than the startup threshold for energy saving; or, send the service utilization rate of the service system to an energy-saving system, so that the energy-saving system may determine that the received service utilization rate is smaller than the startup threshold for energy saving, and receive a request sent by the energy-saving system for determining the board of the service system, where the board of the service system is required to be powered down.

The power-down triggering module 803 may be specifically configured to: notify the energy-saving system of powering down the board in the service system, where the notification carries information about the board in the service system, so that the energy-saving system may power down the board according to the information about the board in the service system.

In an embodiment, the service system shown in FIG. 8 may further include:
a third determination module 804, configured to determine whether the service utilization rate of the service system is smaller than a restore threshold for energy saving before the power-down triggering module 803 triggers power-down of the board in the service system.

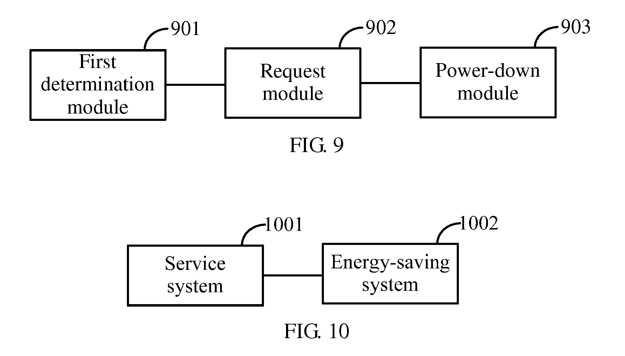

As shown in FIG. 9, an embodiment of the present invention further provides an apparatus for reducing power consumption of a service system, where the apparatus may include:
a first determination module 901, configured to determine that a service utilization rate of the service system is smaller than a startup threshold for energy saving;
a request module 902, configured to request the service system to determine a board of the service system, where the board of the service system is required to be powered down; and
a power-down module 903, configured to power down the board in the service system according to information about the board of the service system, where the board of the service system is determined by the service system and is required to be powered down.

In an embodiment of the present invention, the first determination module 901 may be specifically configured to: receive a notification indicating that the service system determines that the service utilization rate of itself is smaller than the startup threshold for energy saving.

Alternatively, the first determination module 901 may be specifically configured to: receive the service utilization rate sent by the service system and judge that the received service utilization rate is smaller than the startup threshold for energy saving.

As shown in FIG. 10, a control system for reducing power consumption of a service system may include:
the service system 1001, configured to: after determining that a service utilization rate of the service system is smaller than a startup threshold for energy saving, determine, according to a preset condition, a board of the service system, where the board of the service system is required to be powered down, and notify an energy-saving system of powering down the board in the service system, where the notification carries information about the board in the service system; and
the energy-saving system 1002, configured to power down the board according to the information about the board in the service system.

Besides, the service system in the control system for reducing power consumption of the service system may be used to perform any step performed by the service systems in the foregoing procedures of the methods, and the energy-saving system may be used to perform any step performed by the energy-saving systems in the foregoing procedures of the methods, which are not described in detail herein. The service system and the energy-saving system in the embodiment of the present invention may be located in a same server or different servers.

In the embodiment of the present invention, when the service utilization rate of the service system is smaller than the startup threshold for energy saving, the board of the service system, where the board of the service system is required to be powered down, is determined according to the preset condition, and powered down, which reduces not only CPU power consumption of board power consumption, but power consumption of an entire board, and thereby is capable of more effectively reducing power consumption of the service system, and achieving good energy-saving effects independent of the CPU, in comparison with the technical solution of reducing power consumption of a service system based on the automatic frequency reduction technology of the CPU in the prior art.

In the embodiment of the present invention, after a board of the service system is powered down, if the service utilization rate of the service system is greater than the restore threshold for energy saving, the board previously powered down is repowered up to ensure that a service is processed timely; the power-down of the board, when it is determined that the service utilization rate of the service system is smaller than the restore threshold for energy saving if the board of the service system is powered down, may avoid system vibration as much as possible, and make the service system achieve reliability of telecommunication level; and the stopping delivering a new service to a board before powering down the board of the service system, and powering down the board after determining that all the existing services on the board are stopped, may ensure that the power-down processing on the board has no impact on the services.

The objectives, technical solutions, and beneficial effects of the present invention have been described in further detail through the specific embodiments above. It should be understood that the above descriptions are merely specific embodiments of the present invention, but not intended to limit the protection scope of the present invention.

## Claims

1. A method for reducing power consumption of a telecommunications service system (1001), comprising the steps of:
1) determining (401) whether a service utilization rate of the telecommunications service system (1001) is smaller than a startup threshold for energy saving and, if it is smaller, performing the following steps:
1a) determining (402), according to a preset condition, a board of the telecommunications service system (1001) that is required to be powered down; and
1b) performing vibration detection processing (403) comprising the steps of:
1 b-i) determining whether the service utilization rate of the telecommunications service system (1001) will be smaller or greater than a restore threshold for energy saving, if the determined board will be powered down; and
lb -ii) triggering power-down (407) of the determined board if the service utilization rate of the telecommunications service system (1001) will be smaller than the restore threshold, and not triggering power-down of the determined board if the service utilization rate of the telecommunications service system (1001) will be greater than the restore threshold; and
2) after a board is powered down in step lb-ii, determining (408) whether a service utilization rate of the telecommunications service system (1001) is greater than the restore threshold for energy saving, and, if it is greater, powering up (409) the determined board.

2. The method according to claim 1, wherein before the step lb-ii of triggering power-down (407) of the determined board, the method further comprises the step of:
stopping delivering (404) a new service to the determined board and determining (404) that all existing services on the determined board are stopped.

3. The method according to claim 2, wherein before the step of stopping delivering (404) a new service to the determined board, a request sent by an energy-saving system for performing service isolation (404) on the telecommunications service system (1001) is received, notifying the telecommunications service system (1001) of stopping delivering a new service to the determined board.

4. An apparatus for reducing power consumption of a telecommunications service system (1001), comprising:
a first module (801) for determining (401) whether a service utilization rate of the telecommunications service system (1001) is smaller than a startup threshold for energy saving;
a second module (802) for determining (402), according to a preset condition, a board of the telecommunications service system (1001) that is required to be powered down, if the service utilization rate of the telecommunications service system (1001) is smaller than the startup threshold;
a third module (804) for determining, if the service utilization rate of the telecommunications service system (1001) is smaller than the startup threshold, whether the service utilization rate of the telecommunications service system (1001) will be smaller or greater than a restore threshold for energy saving, if the determined board will be powered down;
a fourth module (803) for triggering, if the service utilization rate of the telecommunications service system (1001) is smaller than the startup threshold, power-down (407) of the determined board if the service utilization rate of the telecommunications service system (1001) will be smaller than the restore threshold, and not triggering power-down of the determined board if the service utilization rate of the telecommunications service system (1001) will be greater than the restore threshold; and
a fifth module for, after a board is powered down, determining (408) whether a service utilization rate of the telecommunications service system (1001) is greater than the restore threshold for energy saving, and, if it is greater, powering up (409) the determined board.

## Patentansprüche

1. Verfahren zum Verringern des Stromverbrauchs eines Telekommunikationsdienstsystems (1001), mit den folgenden Schritten:
1) Bestimmen (401), ob eine Dienstauslastungsrate des Telekommunikationsdienstsystems (1001) kleiner als eine Herauffahrschwelle zum Energiesparen ist, und wenn sie kleiner ist, Ausführen der folgenden Schritte:
1a) Bestimmen (402) einer Baugruppe des Telekommunikationsdienstsystems (1001), die heruntergefahren werden muss, gemäß einer voreingestellten Bedingung; und
1b) Durchführen von Vibrationsdetektionsverarbeitung (403) mit den folgenden Schritten:
1b-i) Bestimmen, ob die Dienstauslastungsrate des Telekommunikationsdienstsystems (1001) kleiner oder größer als eine Wiederherstellschwelle zum Energiesparen sein wird, wenn die bestimmte Baugruppe heruntergefahren wird; und
1b-ii) Triggern des Herunterfahrens (407) der bestimmten Baugruppe, wenn die Dienstauslastungsrate des Telekommunikationsdienstsystems (1001) kleiner als die Wiederherstellschwelle sein wird, und Nichttriggern des Herunterfahrens der bestimmten Baugruppe, wenn die Dienstauslastungsrate des Telekommunikationsdienstsystems (1001) größer als die Wiederherstellschwelle sein wird; und
2) nachdem im Schritt 1b-ii eine Baugruppe heruntergefahren wird, Bestimmen (408), ob eine Dienstauslastungsrate des Telekommunikationsdienstsystems (1001) größer als die Wiederherstellschwelle zum Energiesparen ist, und wenn sie größer ist, Herauffahren (409) der bestimmten Baugruppe.

2. Verfahren nach Anspruch 1, wobei das Verfahren vor Schritt 1b-ii des Triggerns des Herunterfahrens (407) der bestimmten Baugruppe ferner den folgenden Schritt umfasst:
Stoppen der Ablieferung (404) eines neuen Dienstes an die bestimmte Baugruppe und Bestimmen (404), dass alle existierenden Dienste auf der bestimmten Baugruppe gestoppt sind.

3. Verfahren nach Anspruch 2, wobei vor dem Schritt des Stoppens des Ablieferns (404) eines neuen Dienstes an die bestimmte Baugruppe eine durch ein Energiesparsystem zum Durchführen von Dienstisolation (404) an dem Telekommunikationsdienstsystem (1001) gesendete Anforderung empfangen wird, die das Telekommunikationsdienstsystem (1001) über das Stoppen der Ablieferung eines neuen Dienstes an die bestimmte Baugruppe benachrichtigt.

4. Vorrichtung zum Verringern des Stromverbrauchs eines Telekommunikationsdienstsystems (1001), umfassend:
ein erstes Modul (801) zum Bestimmen (401), ob eine Dienstauslastungsrate des Telekommunikationsdienstsystems (1001) kleiner als eine Herauffahrschwelle zum Energiesparen ist;
ein zweites Modul (802) zum Bestimmen (402) einer Baugruppe des Telekommunikationsdienstsystems (1001), die heruntergefahren werden muss, wenn die Dienstauslastungsrate des Telekommunikationsdienstsystems (1001) kleiner als die Herauffahrschwelle ist, gemäß einer voreingestellten Bedingung;
ein drittes Modul (804) zum Bestimmen, falls die Dienstauslastungsrate des Telekommunikationsdienstsystems (1001) kleiner als die Herauffahrschwelle ist, ob die Dienstauslastungsrate des Telekommunikationsdienstsystems (1001) kleiner oder größer als eine Wiederherstellschwelle zum Energiesparen sein wird, wenn die bestimmte Baugruppe heruntergefahren wird;
ein viertes Modul (803) zum Triggern des Herunterfahrens (407) der bestimmten Baugruppe, wenn die Dienstauslastungsrate des Telekommunikationsdienstsystems (1001) kleiner als die Herauffahrschwelle ist, wenn die Dienstauslastungsrate des Telekommunikationsdienstsystems (1001) kleiner als die Wiederherstellschwelle sein wird, und Nichttriggern des Herunterfahrens der bestimmten Baugruppe, wenn die Dienstauslastungsrate des Telekommunikationsdienstsystems (1001) größer als die Wiederherstellschwelle sein wird; und
ein fünftes Modul zum Bestimmen (408), nachdem eine Baugruppe heruntergefahren ist, ob eine Dienstauslastungsrate des Telekommunikationsdienstsystems (1001) größer als die Wiederherstellschwelle zum Energiesparen ist, und wenn sie größer ist, Herauffahren (409) der bestimmten Baugruppe.

## Revendications

1. Procédé pour réduire la consommation énergétique d'un système de service de télécommunication (1001) comprenant les étapes suivantes :
1) déterminer (401) si un taux d'utilisation de service du système de service de télécommunication (1001) est inférieur à un seuil de démarrage d'économie d'énergie et, s'il est inférieur, exécuter les étapes suivantes :
1a) déterminer (402), conformément à une condition prédéfinie, une carte du système de service de télécommunication (1001) qui doit être mise hors tension ; et
1b) exécuter un traitement de détection de vibrations (403) comprenant les étapes suivantes :
1b-i) déterminer si le taux d'utilisation de service du système de service de télécommunication (1001) sera inférieur ou supérieur à un seuil de rétablissement d'économie d'énergie, si la carte déterminée est mise hors tension ;
1b-ii) déclencher une mise hors tension (407) de la carte déterminée si le taux d'utilisation de service du système de service de télécommunication (1001) sera inférieur au seuil de rétablissement, et ne pas déclencher la mise hors tension de la carte déterminée si le taux d'utilisation de service du système de service de télécommunication (1001) sera supérieur au seuil de rétablissement ; et
2) après qu'une carte a été mise hors tension dans l'étape 1b-ii, déterminer (408) si un taux d'utilisation de service du système de service de télécommunication (1001) est supérieur au seuil de rétablissement d'économie d'énergie et, s'il est supérieur, effectuer la mise sous tension (409) de la carte déterminée.

2. Procédé selon la revendication 1, dans lequel, avant l'étape 1b-ii comprenant de déclencher la mise hors tension (407) de la carte déterminée, le procédé comprend en outre l'étape suivante :
arrêter de délivrer (404) un nouveau service à la carte déterminée et déterminer (404) que tous les services existants sur la carte déterminée sont arrêtés.

3. Procédé selon la revendication 2, dans lequel, avant l'étape comprenant d'arrêter de délivrer (404) un nouveau service à la carte déterminée, une demande envoyée par un système d'économie d'énergie pour procéder à une isolation du service (404) sur le système de service de télécommunication (1001) est reçue, notifiant au système de service de télécommunication (1001) d'arrêter de délivrer un nouveau service à la carte déterminée.

4. Appareil pour réduire la consommation d'énergie d'un système de service de télécommunication (1001), comprenant :
un premier module (801) pour déterminer (401) si un taux d'utilisation de service du système de service de télécommunication (1001) est inférieur à un seuil de démarrage d'économie d'énergie ;
un second module (802) pour déterminer (402), conformément à une condition prédéfinie, une carte du système de service de télécommunication (1001) qui doit être mise hors tension si le taux d'utilisation de service du système de service de télécommunication (1001) est inférieur au seuil de démarrage ;
un troisième module (804) pour déterminer, si le taux d'utilisation de service du système de service de télécommunication (1001) est inférieur au seuil de démarrage,
si le taux d'utilisation de service du système de service de télécommunication (1001) sera inférieur ou supérieur à un seuil de rétablissement d'économie d'énergie, si la carte prédéterminée est mise hors tension ;
un quatrième module (803) pour déclencher, si le taux d'utilisation de service du système de service de télécommunication (1001) est inférieur au seuil de démarrage, une mise hors tension (407) de la carte déterminée si le taux d'utilisation de service du système de service de télécommunication (1001) sera inférieur au seuil de rétablissement, et ne pas déclencher la mise hors tension de la carte prédéterminée si le taux d'utilisation de service du système de service de télécommunication (1001) sera supérieur au seuil de rétablissement ; et
un cinquième module pour, après qu'une carte a été mise hors tension, déterminer (408) si un taux d'utilisation de service du système de service de télécommunication (1001) est supérieur au seuil de rétablissement d'économie d'énergie et, s'il est supérieur, effectuer la mise sous tension (409) de la carte déterminée.
